# EUROPÄISCHE PATENTSCHRIFT

(11) **EP 3 563 357 B1**
(45) Veröffentlichungstag und Bekanntmachung des Hinweises auf die Patenterteilung: **20.09.2023**
(21) Anmeldenummer: 17826139.2
(22) Anmeldetag: 22.12.2017
(51) Int. Cl.: G07D 7/04

(54) **VERFAHREN UND VORRICHTUNG ZUM DETEKTIEREN EINES SICHERHEITSFADENS IN EINEM WERTDOKUMENT**
METHOD AND APPARATUS THAT DETECTS SECURITY THREADS IN A VALUBALE DOCUMENT
PROCÉDÉ ET DISPOSITIF PERMETTANT DE DÉTECTER UN FIL DE SÉCURITÉ DANS UN DOCUMENT DE VALEUR

(30) Priorität: 27.12.2016 DE 102016015545
(43) Veröffentlichungstag der Anmeldung: 06.11.2019
(73) Patentinhaber: Giesecke+Devrient Currency Technology GmbH, 81677 München (DE)
(72) Erfinder: FEULNER, Johannes, 81925 München (DE); SCHMALZ, Steffen, 81375 München (DE)
(74) Vertreter: Giesecke + Devrient IP
(86) Internationale Anmeldenummer: PCT/EP2017/001446
(87) Internationale Veröffentlichungsnummer: WO 2018/121883

(56) Entgegenhaltungen:
- EP-A2- 0 276 814
- DE-T2- 60 215 768
- GB-A- 2 098 768
- US-A1- 2007 095 630

## Beschreibung

Die vorliegende Erfindung betrifft ein Verfahren zur Detektion eines Sicherheitsfadens in einem Wertdokumente und Mittel zur Durchführung des Verfahrens.

Unter Wertdokumenten werden dabei blattförmige Gegenstände verstanden, die beispielsweise einen monetären Wert oder eine Berechtigung repräsentieren und daher nicht beliebig durch Unbefugte herstellbar sein sollen. Sie weisen daher nicht einfach herzustellende, insbesondere zu kopierende Merkmale, sogenannten Sicherheitsmerkmale, auf, deren Vorhandsein ein Indiz für die Echtheit, d.h. die Herstellung durch eine dazu befugten Stelle, ist. Wichtige Beispiele für solche Wertdokumente sind Chipkarten, Coupons, Gutscheine, Schecks und insbesondere Banknoten.

Bestimmte Typen von Wertdokumenten enthalten häufig als Sicherheitsmerkmal einen Sicherheitsfaden, der wenigstens teilweise in das Substrat des Wertdokuments eingebettet ist. Da die Sicherheitsfäden oft in das Substrat von Wertdokumenten eingebettet sind, sind Wertdokumente mit Sicherheitsfäden in den Abschnitten mit den Sicherheitsfäden dicker, was beim Stapeln zu schiefen Stapeln führen könnte. Die Lage von Sicherheitsfäden in Wertdokumenten, auch desselben Typs, ist daher nicht genau festgelegt, sondern kann in vorgegebenen Grenzen schwanken.

Vielfach verfügen die Sicherheitsfäden über einen oder mehrere magnetisierbare Bereiche, die mittels eines äußeren Magnetfeldes magnetisierbar sind. Im Folgenden wird unter einem Sicherheitsfaden ein Sicherheitsfaden verstanden, der als Ganzes magnetisierbar ist oder einen oder mehrere magnetisierbare Bereiche aufweist. Solche Sicherheitsfäden bzw. Bereiche von Sicherheitsfäden sind mittels geeigneter Magnetsensoren detektierbar. Beispiele für solche Sensoren sind beispielsweise in DE 196 25 224 A1, DE 10 2008 061 507 A1, DE 10 2009 039588 A1, DE 10 2010 035469 A1, DE 10 2011120 972 A1 und WO 2011/154088 A1 beschrieben. Zur Erhöhung der Sicherheit können die Sicherheitsfäden eine magnetische Kodierung aufweisen. Die magnetische Kodierung kann durch Abschnitte des Sicherheitsfadens gebildet werden, die unterschiedliche magnetische Eigenschaften nach einem vorgegebenen Muster bzw. Code aufweisen. Die Abschnitte können sich insbesondere durch deren Magnetisierbarkeit unterscheiden; beispielsweise können die Abschnitte weich- oder hartmagnetisch sein. Hartmagnetische Abschnitte können sich zudem in ihrer Koerzitivfeldstärke unterscheiden. Eine genauere Prüfung solcher Sicherheitsfäden mit Codierung wird wesentlich erleichtert, wenn die Lage des Sicherheitsfadens bekannt ist.

Zur maschinellen Prüfung werden Magnetsensoren verwendet. Zur Detektion eines Sicherheitsfadens, d. h. wenigstens dessen Vorhandenseins und/oder dessen Lage, müssen die Messsignale eines jeweiligen Magnetsensors ausgewertet werden. Dies wird jedoch dadurch erschwert, dass die Messsignale Rauschen unterliegen können. Weiter können in dem Substrat eines Wertdokuments kleine Teile von magnetisierbaren Materialien vorhanden sein, die unbeabsichtigt in das Substratmaterial gelangt sind. Auch kann ein Druck mit einer magnetisierbaren Druckfarbe eine Erkennung des Sicherheitsfadens erschweren.

US 2007/0095630 A1 Eine Geldbewertungsvorrichtung zum Empfangen eines Geldscheins mit einem magnetischen Attribut und zum Bewerten des Geldscheins umfasst einen magnetischen Abtastkopf, der neben einem Banknotenbewertungsbereich angeordnet ist, einen Speicher, der zum Speichern von magnetischen Bezugskennlinieninformationen entsprechend einer Vielzahl von Typen von Geldscheinen ausgelegt ist, und eine Auswerteeinheit. Der Abtastkopf enthält mehrere eng beabstandete Magnetsensoren, die jeweils dazu ausgelegt sind, das Vorhandensein eines magnetischen Attributs der Banknote zu erfassen. Die Vielzahl von Magnetsensoren deckt einen wesentlichen Teil einer Dimension einer Banknote ab. Der Scankopf ist angepasst, um magnetische charakteristische Informationen von dem Geldschein gewinnen. Die Auswerteeinheit ist angepasst, um den Geldschein durch Vergleichen der abgerufenen magnetischen Kennlinieninformationen mit den gespeicherten magnetischen Bezugskennlinieninformationen zu bewerten und ein Fehlersignal zu erzeugen, wenn die abgerufenen magnetischen Kennlinieninformationen nicht günstig mit den gespeicherten magnetischen Hauptkennlinieninformationen vergleichbar ist.

In EP 0276814 A2 sind Vorrichtungen und Verfahren zum Verifizieren von Objekten beschrieben, die eine inhärent zufällig variierende und nachweisbare Eigenschaft einer Vielzahl von beabstandeten, magnetisierbaren Magnetbereichen verwenden, die an dem Objekt angebracht sind. Die Nachweisbarkeit der zufällig variierenden magnetischen Eigenschaften kann durch Sättigung der magnetischen Bereiche verbessert werden. Eine Verifizierungsvorrichtung erfasst die zufällig variierenden magnetischen Eigenschaften und vergleicht sie mit einem zuvor erstellten vorgespeicherten repräsentativen Profil. Die Entsprechung zwischen dem vorgespeicherten Profil und den aktuell gelesenen Merkmalen zeigt ein authentisches Objekt an. Andere Objekte können abgelehnt werden.

Der vorliegenden Erfindung liegt daher die Aufgabe zugrunde, ein Verfahren zum Detektieren eines Sicherheitsfadens in einem Wertdokument anzugeben, das robust und einfach arbeitet. Weiter ist es Aufgabe der vorliegenden Erfindung, Mittel zur Durchführung des Verfahrens anzugeben.

Die Aufgabe wird gelöst durch ein Verfahren zum Detektieren eines Sicherheitsfadens in einem Wertdokument nach Anspruch 1. ausgenutzt, dass Sicherheitsfäden geradlinig in einem Wertdokument verlaufen. Vorzugsweise ist die Gerade so bestimmt, dass möglichst viele der Prüforte entlang oder auf der Geraden liegen.

Es bevorzugt, dass zum Bestimmen der Geraden eine Menge von Zellen bereitgestellt wird, die eine Aufteilung wenigstens eines vorgegebenen Teils eines Parameterraums für Geradenparameter in Zellen darstellen, für die Prüforte jeweils Zellen der Menge ermittelt werden, innerhalb derer jeweils Geradenparameter einer Geraden liegen, die durch den jeweiligen Prüfort verläuft, und eine Zellensumme für die jeweilige Zelle um einen Inkrementwert erhöht wird, und die Zelle mit der höchsten Zellensumme gesucht und als Lage des Sicherheitsfadens eine durch der Zelle zugeordnete Geradenparameter gegebene Gerade ermittelt wird.

Die Aufgabe wird weiter gelöst durch ein Verfahren gemäß Anspruch 2 und insbesondere ein Verfahren zum Detektieren eines Sicherheitsfadens in einem Wertdokument, bei dem Magnetdaten für Orte auf dem Wertdokument verwendet werden, die eine magnetische Eigenschaft des Wertdokuments an dem Ort darstellen, unter Verwendung der Orte Prüforte auf dem Wertdokument festgelegt werden, eine Menge von Zellen bereitgestellt wird, die eine Aufteilung wenigstens eines vorgegebenen Teils eines Parameterraums für Geradenparameter in Zellen darstellen, darstellen, wobei jeder der Zellen eine Zellensumme zu- geordnet ist, die zu Beginn auf einen gleichen Anfangswert für alle Zel- len gesetzt wird (S23 22-25), für die Prüforte jeweils Zellen der Menge ermittelt werden, innerhalb derer jeweils Geradenparameter einer Geraden liegen, die durch den jeweiligen Prüfort verläuft, und eine Zellensumme für die jeweilige Zelle um einen Inkrementwert erhöht wird, und die Zelle mit der höchsten Zellensumme gesucht und als Lage des Sicherheitsfadens eine durch der Zelle zugeordnete Geradenparameter gegebene Gerade ermittelt wird.

Die Aufgabe wird weiter gelöst durch eine Auswerteeinrichtung zum Detektieren eines Sicherheitsfadens in einem Wertdokument, die eine Schnittstelle zum Erfassen von Signalen, aus denen die Magnetdaten ermittelbar sind, oder der Magnetdaten, aufweist, und dazu eingerichtet ist, ein erfindungsgemäßes Verfahren durchzuführen.

Die Aufgabe wird weiter gelöst durch ein Computerprogramm zur Ausführung mittels einer Datenverarbeitungseinrichtung mit einem Prozessor, das Programmcode enthält, bei dessen Ausführung durch den Prozessor ein erfindungsgemäßes Verfahren ausgeführt wird.

Die Aufgabe wird weiter gelöst durch einen computerlesbaren Datenträger, auf dem ein erfindungsgemäßes Computerprogramm gespeichert ist.

Die erfindungsgemäße Auswerteeinrichtung kann insbesondere eine Datenverarbeitungseinrichtung mit wenigstens einem Prozessor und einen Speicher, in dem ein erfindungsgemäßes Computerprogramm zur Ausführung durch den Prozessor gespeichert ist, aufweisen.

Soweit sich aus dem Zusammenhang nichts anderes ergibt, gelten die folgenden allgemeinen Angaben für beide Verfahren.

Mit dem erfindungsgemäßen Verfahren und den erfindungsgemäßen Mitteln zur Durchführung des Verfahrens ist es möglich, in sehr robuster Weise einfach die Lage eines Sicherheitsfadens zu ermitteln, auch wenn sich im Bereich des Sicherheitsfadens andere magnetisierbare Bestandteile und/oder Magnetdruck befinden.

Bei dem Verfahren werden Magnetdaten für Orte auf dem Wertdokument verwendet, die eine magnetische Eigenschaft des Wertdokuments an dem Ort darstellen. Die Magnetdaten werden in der Regel für einen kleinen Bereich des Wertdokumentes, einen Messfleck, erfasst, dessen Form und Größe von der Ortsauflösung eines zur Erfassung der Magnetdaten verwendeten Magnetsensors abhängig ist. Unter dem Ort wird dann ein durch Koordinaten gegebener Ort verstanden, der sich nach einer vorgegebenen Vorschrift aus der Form und Lage des Messflecks ergibt. Beispielsweise könnte der geometrische Mittelpunkt des Messflecks verwendet werden.

Die Magnetdaten stellen eine magnetische Eigenschaft des Wertdokuments an dem Ort dar. Bei der magnetischen Eigenschaft kann es sich je nach Typ des Wertdokuments, genauer des Sicherheitsfadens, beispielsweise um die Magnetisierbarkeit oder die Remanenz handeln. Für die Zwecke des erfindungsgemäßen Verfahrens genügt es dabei, dass aus für einen Ort aus Signalen eines zur Erfassung verwendeten Magnetsensors eine Zahl ermittelt und als Magnetdatum verwendet wird, die beliebige für das Verfahren vorgegebenen Einheiten haben und beliebig für das Verfahren vorgegeben skaliert sein kann.

Bei dem Verfahren können die Magnetdaten bei ihrer Verwendung beispielsweise aus einem Speicher, in dem sie gespeichert sind, gelesen und dann weiter verwendet werden.

Bei einer bevorzugten Variante können mittels eines Magnetsensors Magnetdaten für Orte auf dem Wertdokument, d. h. ortsaufgelöst, erfasst und diese Magnetdaten als Magnetdaten verwendet werden. Als Magnetsensoren kommen prinzipiell beliebige Magnetsensoren in Betracht, beispielsweise induktive Magnetsensoren, magneto-resistive Magnetsensoren, GMR-Sensoren oder auch Hall-Sensoren.

Bei dem Verfahren werden nicht unbedingt alle für ein Wertdokument erfassten Magnetdaten verwendet. Vorzugsweise werden Prüforte bestimmt, die nur in einem Teilbereich des Wertdokuments liegen. Dieser Teilbereich, in dem der Sicherheitsfaden vermutet wird, kann auf unterschiedliche Weise bestimmt bzw. vorgegeben werden. So kann bei dem Verfahren ein Wertdokumenttyp des Wertdokuments bestimmt und der Teilbereich in Abhängigkeit von dem bestimmten Wertdokumenttyp vorgegeben werden. Der Wertdokumenttyp kann im Fall von Wertdokumenten in Form von Banknoten beispielsweise durch die Währung, die Denomination bzw. den Wert und optional die Emission der Banknoten gegeben sein. Besonders bevorzugt wird auch eine Lage des Wertdokuments ermittelt und der Teilbereich zusätzlich in Abhängigkeit von der ermittelten Lage vorgegeben. Befindet oder bewegt sich das Wertdokument bei Erfassung der Magnetdaten in einer Ebene, wird unter der Lage des Wertdokuments eine der vier möglichen Ausrichtungen des Wertdokuments in der Ebene verstanden, die sich durch Drehungen um 180° um Achsen durch den Schwerpunkt des Wertdokuments, die parallel bzw. senkrecht zu einem längeren Rand des Wertdokuments verlaufen. Beim Vorgeben des Teilbereichs können insbesondere für den Wertdokumenttyp und gegebenenfalls die Lage vorgegebene Referenzparameter verwendet werden, die, beispielsweise in der Auswerteeinrichtung, gespeichert sein können.

Es ist aber auch möglich, den Teilbereich aus den Magnetdaten unter Verwendung wenigstens eines vorgegebenen Kriteriums zu bestimmen. Das Kriterium kann insbesondere ein Kriterium dafür sein, dass die Magnetdaten zur Detektion des Sicherheitsfadens geeignet sind. Besonders bevorzugt, kann das Kriterium die magnetische Eigenschaft und/oder die örtliche Lage bzw. Verteilung der Prüforte und/oder eine örtliche Änderungen, vorzugsweise einen Gradienten, der magnetischen Eigenschaft in wenigstens einer vorgegebenen Richtung betreffen. Beispielsweise kann das Kriterium darin bestehen, dass der Teilbereich ein Rechteck ist, das sich quer über das Wertdokument erstreckt, und das Orte enthält, deren Magnetdaten ein vorgegebenes Datenkriterium erfüllen.

Auf diese Weise kann die in der Folge verwendete Anzahl von Messwerten deutlich reduziert und damit die Durchführung des Verfahrens beschleunigt werden. Darüber hinaus können offensichtlich allein schon wegen ihrer Lage auf dem Wertdokument ungeeignete Messwerte ausgeschlossen werden, die die Zuverlässigkeit und/ oder Genauigkeit beeinträchtigen würden. Auf diese Weise kann eine zuverlässigere und/ oder robustere Detektion ermöglicht werden. Zudem kann das Verfahren schneller durchgeführt werden.

Prinzipiell können bei dem Verfahren die erfassten Magnetdaten verwendet werden. Es ist jedoch bevorzugt, dass zum Festlegen der Prüforte die Magnetdaten in dem vorgegebenen Teilbereich unter Bildung gefilterter Magnetdaten gefiltert und die gefilterten Magnetdaten zum Festlegen der Prüforte verwendet werden. Auf diese Weise können beispielsweise Orte, an denen die Magnetdaten durch Rauschen verfälscht sind oder nur Rauschen darstellen, vermieden werden. Vorzugsweise wird zum Filtern ein Filter verwendet, das glättend wirkt und/oder auf Gradienten der Magnetdaten anspricht. Durch das Glätten können Schwankungen durch Messungenauigkeiten wenigstens teilweise unterdrückt werden. Das Filter, das auf Gradienten anspricht, hebt Orte hervor, an denen sich die Magnetdaten stark ändern wie es an einem Sicherheitsfaden zu erwarten ist. Die Gradienten können vorzugsweise Gradienten in einer Richtung quer zur erwarteten Richtung eine zu detektierenden Sicherheitsfadens sein.

Die Prüforte können nun so bestimmt werden, dass die Magnetdaten für diese Orte oder die gefilterten Magnetdaten für diese Orte, ein vorgegebenes Kriterium, beispielsweise ein Schwellwertkriterium erfüllen. Als Schwellwertkriterium kann beispielsweise das Kriterium verwendet werden, dass die Magnetdaten bzw. die gefilterten Magnetdaten einen vorgegebenen Schwellwert überschreiten; dieser Schwellwert kann so gewählt sein, dass Magnetdaten bzw. gefilterte Magnetdaten, die Rauschen oder anderen Messungenauigkeiten entsprechen, unterhalb des Schwellwertes liegen, andere aber darüber.

Eine weitere Reduktion der Anzahl der Prüforte kann erzielt werden, wenn der Sicherheitsfaden nur schmal ist und zu erwarten ist, dass in einer Richtung quer zum Sicherheitsfaden nur wenige Orte mit Magnetdaten auftreten, die nicht durch den Sicherheitsfaden bedingt sind. Es ist dann bei dem Verfahren bevorzugt, dass für parallele Streifen, die quer zu einer vorgegebenen erwarteten Richtung des Sicherheitsfadens verlaufen, jeweils ein Prüfort in dem Streifen festgelegt wird, für den die Magnetdaten bzw. gefilterten Magnetdaten für Orte in dem Streifen ein vorgegebenes Streifenkriterium erfüllen. Als Streifenkriterium kann beispielsweise das Kriterium verwendet werden, dass die Magnetdaten bzw. gefilterten Magnetdaten für den Prüfort das Maximum der Magnetdaten bzw. gefilterten Magnetdaten für alle Orte in dem Streifen sind.

Bei dem erfindungsgemäßen Verfahren wird ausgenutzt, dass Sicherheitsfäden typischerweise gerade, d. h. entlang eines Abschnitts einer Geraden, verlaufen. Jedoch ist nicht zu erwarten, dass alle Prüforte genau auf einer Geraden liegen.

Die Lage und der Verlauf einer Geraden in einer Ebene, im Beispiel der Transportebene, in der das Wertdokument im Bereich des Magnetsensors transportiert, bzw. der Wertdokumentebene, kann durch zwei Geradenparameter festgelegt sein. Der Parameterraum für Geraden ist daher zweidimensional, wobei aber verschiedene Parametrisierungen möglich sind. Bei dem Verfahren wird daher eine Menge von Zellen bereitgestellt, die eine Aufteilung wenigstens eines vorgegebenen Teils eines Parameterraums für Geradenparameter in Zellen darstellen.

Prinzipiell kann der gesamte Parameterraum verwendet werden, aus Gründen der Effizienz braucht aber nur ein Teil des Parameterraums verwendet zu werden. Vorzugsweise kann der Teil in Abhängigkeit von einer vorgegebenen erwarteten Richtung des Sicherheitsfadens und/ oder einer erwarteten Position des Sicherheitsfadens festgelegt werden. Beispielsweise werden Geraden, die senkrecht zu einer erwarteten Richtung des Sicherheitsfadens verlaufen, auf das Ergebnis keinen Einfluss haben.

So können vorzugsweise bei dem Verfahren die Zellen so gewählt sein, dass Geraden, die durch Geradenparameter innerhalb der jeweiligen Zelle gegeben sind, mit der vorgegebenen erwarteten Richtung des Sicherheitsfadens einen Winkel einschließen, der in einem vorgegebenen Winkelintervall, vorzugsweise zwischen 0° und 45°, liegt.

Weiter sollte der Sicherheitsfaden innerhalb des Teilbereichs, in dem sich die Prüforte befinden, liegen. Bei dem Verfahren ist es daher bevorzugt, dass die Zellen so gewählt sind, dass Geraden, die durch Geradenparameter innerhalb der jeweiligen Zelle gegeben sind, wenigstens näherungsweise orthogonal zu der vorgegebenen erwarteten Richtung des Sicherheitsfadens verlaufende Ränder des Teilbereichs schneiden. Hierdurch werden sowohl die Neigung bzw. Richtung der Geraden als auch die Position der Geraden auf einen sinnvollen Bereich eingeschränkt.

Die Zellen können prinzipiell beliebig gewählt werden, sind jedoch vorzugsweise gleich groß gewählt.

Bei dem Verfahren werden für die Prüforte jeweils diejenigen Zellen der Menge von Zellen ermittelt, innerhalb derer Geradenparameter einer Geraden liegen, die durch den jeweiligen Prüfort verläuft. Beispielsweise kann aus dem Prüfort und einem ersten der Geradenparameter für eine Zelle der zweite Geradenparameter berechnet werden, der dann zusammen mit dem ersten Parameter die Zelle bestimmt.

Jeder der Zellen ist eine Zeilensumme zugeordnet, die für alle Zellen zu Beginn auf den gleichen Wert gesetzt wird. Wird nun festgestellt, dass die Geradenparameter einer Geraden, die durch den Prüfort verläuft, innerhalb einer Zelle liegt, wird die Zeilensumme inkrementiert, das heißt um einen definierten Inkrementwert erhöht.

Für die Wahl des Inkrementwertes gibt es verschiedene Möglichkeiten. So kann bei einer bevorzugten Ausführungsform des Verfahrens der der Inkrementwert unabhängig vom Prüfort und von den, gegebenenfalls gefilterten, Magnetdaten dort gewählt sein. Dieses Vorgehen ist besonders einfach und kann insbesondere auch bei Sicherheitsfäden angewendet werden, bei denen die Magneteigenschaften nicht konstant sind.

Bei einer anderen Ausführungsform des Verfahrens kann jedem der Prüforte ein Verarbeitungswert, der von den Magnetdaten oder den gefilterten Magnetdaten abhängig ist, zugeordnet sein, und der Inkrementwert für den jeweiligen Prüfort kann von dem zugeordneten Verarbeitungswert abhängig sein. Dies kann, je nach Art des Sicherheitsfadens, den Vorteil bieten, dass Prüforte mit geringeren und daher möglicherweise weniger zuverlässigen Magnetdaten nicht so stark gewichtet werden.

Nachdem für die Prüforte die Zellen bestimmt wurden, deren Parameter Geraden durch die jeweiligen Prüforte beschreiben, und deren Zellensummen entsprechende inkrementiert wurden, wird die Zelle mit der höchsten Zellensumme gesucht bzw. ermittelt wird. Die dieser Zelle entsprechenden Geradenparameter geben dann die Richtung und Position des Sicherheitsfadens an. Als Lage des Sicherheitsfadens kann dann eine durch der Zelle zugeordnete Geradenparameter gegebene Gerade ermittelt werden. Diese kann durch die Parameter der Zelle oder andere, die Gerade ebenfalls festlegende Parameter gegeben sein. Als andere Parameter einer Zelle können beliebige Referenzpunkte der Zelle verwendet werden, beispielsweise der geometrische Mittelpunkt der Zelle. Es kann dann wenigstens ein Signal abgegeben werden, das die Gerade bzw. die Parameter darstellt. Es ist auch möglich, dass die Gerade bzw. die Parameter gespeichert und/oder in einem weiteren Verfahrensschritt verwendet werden.

Gemäß einer bevorzugten Weiterbildung kann ein Kriterium für das Vorhandensein eines Sicherheitsfadens, das von der höchsten Zeilensumme abhängt, geprüft werden, wozu vorzugsweise die höchste Zellensumme mit einem vorgegebenen Schwellwert verglichen werden und besonders bevorzugt in Abhängigkeit von dem Ergebnis des Vergleichens ein Hinweis auf die Präsenz eines Sicherheitsfadens bzw. ein Hinweis auf das Fehlen eines Sicherheitsfadens erzeugt und/oder gespeichert und/oder ein Signal, das einen Hinweis auf die Präsenz eines Sicherheitsfadens bzw. ein Hinweis auf das Fehlen eines Sicherheitsfadens darstellt, abgegeben werden kann. Ein solcher Hinweis kann zur Beurteilung des Vorliegens der Echtheit oder eines Fälschungsverdachts oder einer Fälschung verwendet werden.

Weiterer Gegenstand der Erfindung ist eine Vorrichtung zur Detektion eines Sicherheitsfadens in einem Wertdokument, umfassend einen Magnetsensor zur Bereitstellung der Magnetdaten und eine erfindungsgemäße Auswerteeinrichtung, wobei vorzugsweise der Magnetsensor mit der Schnittstelle der Auswerteeinrichtung zur Übertragung von Magnetdaten verbunden ist.

Die Vorrichtung kann vorzugsweise weiter eine Transporteinrichtung zum Transportieren des Wertdokuments entlang eines Transportpfades aufweisen, wobei der Magnetsensor an dem Transportpfad angeordnet ist.

Je nach Art des Transports des Wertdokuments kann die Transportrichtung mit der erwarteten Richtung des Sicherheitsfadens zusammenhängen. Erstreckt sich der Sicherheitsfaden in dem Wertdokument quer zu dessen Längsrichtung (Rand mit der größten Länge) liegt die erwartete Richtung des Sicherheitsfadens parallel zur Transportrichtung, wenn das Wertdokument im Quertransport, d.h. mit der Längsrichtung quer zur Transportrichtung transportiert wird. Wird das Wertdokument im Längstransport, d.h. mit der Längsrichtung wenigstens näherungsweise parallel zur Transportrichtung transportiert, liegt die erwartete Richtung des Sicherheitsfadens quer zur Transportrichtung.

Die Erfindung kann besonders gut in einer Vorrichtung zur Bearbeitung von Wertdokumenten eingesetzt werden. Gegenstand der Erfindung ist daher auch eine Vorrichtung zur Bearbeitung von Wertdokumenten mit einer Zuführeinrichtung zum Zuführen zu bearbeitender Wertdokumente, einer Ausgabeeinrichtung zur Ausgabe oder Aufnahme der bearbeiteten Wertdokumente, einer Transporteinrichtung zum Transportieren der Wertdokumente von der Zuführeinrichtung entlang eines Transportpfades zu der Ausgabeeinrichtung und mit wenigstens einer im Bereich eines Abschnitts des Transportpfades angeordneten erfindungsgemäßen Vorrichtung zur Detektion eines Sicherheitsfadens in einem Wertdokument, das entlang des Transportpfads transportiert wird. Insbesondere kann der Magnetsensor an dem Transportpfad angeordnet sein.

Die Erfindung wird im Folgenden noch weiter beispielhaft an Hand der Zeichnungen erläutert. Es zeigen:
- Fig. 1: eine schematische Darstellung einer Wertdokumentbearbeitungsvorrichtung, im Beispiel einer Banknotensortiervorrichtung,
- Fig. 2: eine grob schematische Darstellung eines Magnetsensors der Wertdokumentbearbeitungsvorrichtung in Fig. 1,
- Fig. 3: eine schematische Darstellung eines Wertdokuments mit einem Sicherheitsfaden und eines Feldes von Orten auf dem Wertdokument, für das Magnetdaten erfasst werden,
- Fig. 4: ein grob schematisches Ablaufdiagramm eines Beispiels für ein Verfahren zur Detektion eines Sicherheitsfadens in einem Wertdokument,
- Fig. 5: ein Filter, das in Schritt S14 verwendet wird,
- Fig. 6: eine schematische Darstellung eines Teils eines Parameterraums für Geradenparameter, und
- Fig.7: ein grob schematisches Ablaufdiagramm eines weiteren Verfahrens zur Detektion eines Sicherheitsfadens in einem Wertdokument.

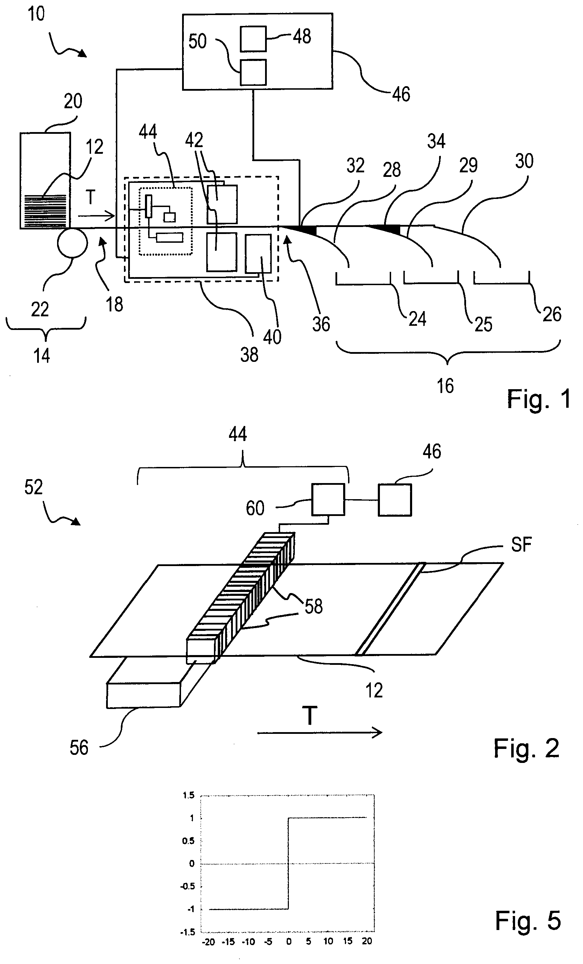

Eine Wertdokumentbearbeitungsvorrichtung 10 in Fig. 1, im Beispiel eine Vorrichtung zur Bearbeitung von Wertdokumenten 12 in Form von Banknoten, ist zur Sortierung von Wertdokumenten 12 in Abhängigkeit von dem mittels der Wertdokumentbearbeitungsvorrichtung 10 ermittelten Zustand und der mittels der Wertdokumentbearbeitungsvorrichtung 10 geprüften Echtheit von bearbeiteten Wertdokumenten ausgebildet.

Sie verfügt über eine Zuführeinrichtung 14 zum Zuführen von Wertdokumenten 12, eine Ausgabeeinrichtung 16 zur Abgabe bzw. Aufnahme bearbeiteter, d. h. sortierter Wertdokumente, und eine Transporteinrichtung 18 zum Transportieren von vereinzelten Wertdokumenten von der Zuführeinrichtung 14 zu der Ausgabeeinrichtung 16.

Die Zuführeinrichtung 14 umfasst im Beispiel ein Eingabefach 20 für einen Wertdokumentstapel und einen Vereinzler 22 zur Vereinzelung von Wertdokumenten 12 aus dem Wertdokumentstapel in dem Eingabefach 20 und Bereitstellung für die bzw. Zuführung zu der Transporteinrichtung 18.

Die Ausgabeeinrichtung 16 umfasst im Beispiel drei Ausgabeabschnitte 24, 25 und 26, in die bearbeitete Wertdokumente je nach dem Ergebnis der Bearbeitung, im Beispiel Prüfung, sortiert werden können. Im Beispiel umfasst jeder der Abschnitte ein Stapelfach und ein nicht gezeigtes Stapelrad, mittels dessen zugeführte Wertdokumente in dem Stapelfach abgelegt werden können.

Die Transporteinrichtung 18 verfügt über wenigstens zwei, im Beispiel drei Zweige 28, 29 und 30, an deren Enden jeweils einer der Ausgabeabschnitte 24 bzw. 25 bzw. 26 angeordnet ist, und an den Verzweigungen über durch Stellsignale steuerbare Weichen 32 und 34, mittels derer Wertdokumente in Abhängigkeit von Stellsignalen den Zweigen 28 bis 30 und damit den Ausgabeabschnitten 24 bis 26 zuführbar sind.

An einem durch die Transporteinrichtung 18 definierten Transportpfad 36 zwischen der Zuführeinrichtung 14, im Beispiel genauer dem Vereinzler 22, und der in Transportrichtung T ersten Weiche 32 nach dem Vereinzler 22 ist eine Sensoreinrichtung 38 angeordnet, die während des Vorbeitransports von Wertdokumenten physikalische Eigenschaften der Wertdokumente misst und die Messergebnisse wiedergebende Sensorsignale bildet, die Sensordaten darstellen. In diesem Beispiel verfügt die Sensoreinrichtung 38 über drei Sensoren, nämlich einen optischen Remissionssensor 40, der ein Remissionsfarbbild des Wertdokuments erfasst, einen optischen Transmissionssensor 42, der ein Transmissionsbild des Wertdokuments erfasst, und einen Magnetsensor 44, der ortsaufgelöst wenigstens eine magnetische Eigenschaft des Wertdokuments erfasst bzw. misst und entsprechende Sensorsignale bzw. Sensordaten bildet, die für einen jeweiligen Ort die erfasste bzw. gemessene magnetische Eigenschaft darstellen.

Eine Steuer- und Auswerteeinrichtung 46 ist über Signalverbindungen mit der Sensoreinrichtung 38 und der Transporteinrichtung 18, insbesondere den Weichen 32 und 34, verbunden. In Verbindung mit der Sensoreinrichtung 38 klassifiziert sie ein Wertdokument in Abhängigkeit von den Signalen bzw. Sensordaten der Sensoreinrichtung 38 für das Wertdokument in eine von vorgegebenen Sortierklassen. Diese Sortierklassen können beispielsweise in Abhängigkeit von einem mittels der Sensordaten ermittelten Zustandswert und einem ebenfalls in Abhängigkeit von einem mittels der Sensordaten ermittelten Echtheitswert vorgegeben sein. Als Zustandswerte können beispielsweise die Werte "umlauffähig" oder "nicht umlauffähig", als Echtheitswerte die Werte "gefälscht", "fälschungsverdächtig" oder "echt" verwendet werden. In Abhängigkeit von der ermittelten Sortierklasse steuert sie durch Abgabe von Stellsignalen die Transporteinrichtung 18, hier genauer die Weichen 32 bzw. 34 so an, dass das Wertdokument entsprechend seiner bei der Klassifizierung ermittelten Sortierklasse in einen der Klasse zugeordneten Ausgabeabschnitt der Ausgabeeinrichtung 16 ausgegeben wird. Die Zuordnung zu einer der vorgegebenen Sortierklassen bzw. die Klassifizierung erfolgt dabei in Abhängigkeit von für die Beurteilung des Zustands und die Beurteilung der Echtheit vorgegebenen Kriterien, die von wenigstens einem Teil der Sensordaten abhängen.

Die Steuer- und Auswerteeinrichtung 46 verfügt dazu insbesondere neben entsprechenden Schnittstellen für die Sensoreinrichtung 38 bzw. deren Sensoren über einen Prozessor 48 und einen mit dem Prozessor 48 verbundenen Speicher 50, in dem wenigstens ein Computerprogramm mit Programmcode gespeichert ist, bei dessen Ausführung der Prozessor 48 die Vorrichtung steuert und die Sensorsignale der Sensoreinrichtung 38, insbesondere zur Ermittlung einer Sortierklasse eines bearbeiteten Wertdokuments, auswertet. Weiter ist Programmcode gespeichert, bei dessen Ausführung der Prozessor 48 die Vorrichtung steuert und entsprechend der Auswertung die Transporteinrichtung 18 ansteuert.

Die Steuer- und Auswerteeinrichtung 46 ermittelt aus den Sensorsignalen der Sensoreinrichtung 38 bei einer Sensorsignalauswertung wenigstens eine Wertdokumenteigenschaft, die für die Überprüfung der Banknoten in Bezug auf deren Echtheit und/ oder Zustand relevant ist. Vorzugsweise werden mehrere dieser Wertdokumenteigenschaften ermittelt. In diesem Beispiel werden als optische Wertdokumenteigenschaften ein Transmissionsbild und ein Remissionsbild und Magnetdaten, die wenigstens eine magnetische Eigenschaft des Wertdokuments in Abhängigkeit von dem Ort auf dem Wertdokument beschreiben, sowie daraus das Vorhandensein, die Lage und Eigenschaften eines Sicherheitsfadens ermittelt.

In Abhängigkeit von den Wertdokumenteigenschaften ermittelt die Steuer- und Auswerteeinrichtung 46 unter Verwendung der Sensordaten der verschiedenen Sensoren in Teilauswertungen jeweils, ob die ermittelten Wertdokumenteigenschaften einen Hinweis auf den Zustand bzw. die Echtheit des Wertdokuments darstellen oder nicht. In der Folge können entsprechende Daten in der Steuer- und Auswerteeinrichtung 46, beispielsweise dem Speicher 50, zur späteren Verwendung gespeichert werden. In Abhängigkeit von den Teilauswertungen ermittelt die Steuer- und Auswerteeinrichtung 46 dann als Gesamtergebnis für die Prüfung gemäß einem vorgegebenen Gesamtkriterium eine Sortierklasse und bildet in Abhängigkeit von der ermittelten Sortierklasse das Sortier- bzw. Stellsignal für die Transporteinrichtung 18.

Zur Bearbeitung von Wertdokumenten 12 werden in das Eingabefach 20 als Stapel oder einzeln eingelegte Wertdokumente 12 von dem Vereinzeler 22 vereinzelt und vereinzelt der Transporteinrichtung 18 zugeführt, die die vereinzelten Wertdokumente 12 an der Sensoreinrichtung 38 vorbeitransportiert. Diese erfasst die Eigenschaften der Wertdokumente 12, wobei Sensorsignale gebildet werden, die die Eigenschaften des jeweiligen Wertdokuments wiedergeben. Die Steuer- und Auswerteeinrichtung 46 erfasst die Sensorsignale bzw. -daten, ermittelt in Abhängigkeit von diesen eine Sortierklasse, im Beispiel eine Kombination aus einer Echtheitsklasse und einer Zustandsklasse, des jeweiligen Wertdokuments und steuert in Abhängigkeit von dem Ergebnis die Weichen so an, dass die Wertdokumente entsprechend der ermittelten Sortierklasse in einen der jeweiligen Sortierklasse zugeordneten Ausgabeabschnitt transportiert wird.

Zur Ermittlung einer Sortierklasse in Abhängigkeit von magnetischen Eigenschaften des Wertdokuments dient unter anderem eine Vorrichtung 52 zur Detektion eines Sicherheitsfadens in einem Wertdokument, in diesem Beispiel den Magnetsensor 44, einen entsprechenden Abschnitt der Steuer- und Auswerteeinrichtung 46, insbesondere entsprechende Instruktionen des Computerprogramms darin, umfasst.

Der Magnetsensor 44 ist grob schematisch in Fig. 2 gezeigt. Er umfasst eine Einrichtung 56 zum Erzeugen eines Magnetfeldes und magnetfeldempfindliche Sensorelemente 58, die gleich ausgebildet und entlang einer Zeile quer zur Transportrichtung T angeordnet sind und zur Erfassung eines Magnetfeldes und Bildung entsprechender Elementsignale ausgebildet sind. Zur Verarbeitung der Elementsignale der Sensorelemente 58 und Bildung der Sensorsignale bzw. Sensordaten des Magnetsensors 44 dient eine Signalbearbeitungseinheit 60, die mit der Steuer- und Auswerteeinrichtung 44 verbunden ist. Die Einrichtung 56 zum Erzeugen eines Magnetfeldes kann wenigstens einen Permanentmagneten und/ oder einen Elektromagneten umfassen. Im Beispiel sind die Sensorelemente 58 magneto-resistive Sensorelemente, in anderen Ausführungsbeispielen könnten diese auch induktiv arbeitenden Sensorelemente und/oder Hallsensoren und/ oder GMR-Sensoren umfassen.

Der Magnetsensor 44 erfasst in vorgegebenen Zeitabständen jeweils Magnetdaten für Orte auf die Wertdokument, die entsprechend der Anordnung der Sensorelemente 58 in einer Zeile quer zur Transportrichtung liegen, und überträgt diese an die Steuer- und Auswerteeinrichtung 46. Die Magnetdaten für einen Ort werden so übertragen und abgespeichert, dass Magnetdaten und Orte einander zugeordnet sind. Im Beispiel werden die Magnetdaten in Abhängigkeit von einer Koordinate entlang einer Richtung parallel zur Transportrichtung und einer Koordinate senkrecht zur Richtung parallel zur Transportrichtung gespeichert. Während die Orte und damit deren Koordinaten quer zur Transportrichtung durch die magnetempfindlichen Sensorelemente des Magnetsensors gegeben sind, ergeben sich die Koordinaten in Transportrichtung aus der Transportgeschwindigkeit, die durch die Transporteinrichtung vorgegeben ist, und den Erfassungszeitpunkten bzw. der Länge der Zeitabstände. Für gleiche Koordinaten quer zur Transportrichtung ergeben sich zu aufeinanderfolgenden Zeitpunkten und damit an entlang der Transportrichtung in Streifen angeordneten, entsprechend beabstandeten Orten diesen zugeordnete Magnetdaten. Die Steuer- und Auswerteeinrichtung 46 speichert die für das Wertdokument empfangenen Magnetdaten in Abhängigkeit von dem Ort. Nachdem das Wertdokument den Magnetsensor 44 passiert hat, liegen daher bei konstanter Transportgeschwindigkeit Magnetdaten für Orte auf einem Rechteckgitter vor, dessen Gitterabstand in Transportrichtung von der Transportgeschwindigkeit und den Zeitabständen und senkrecht zur Transporteinrichtung von dem Abstand der magnetempfindlichen Elemente abhängt.

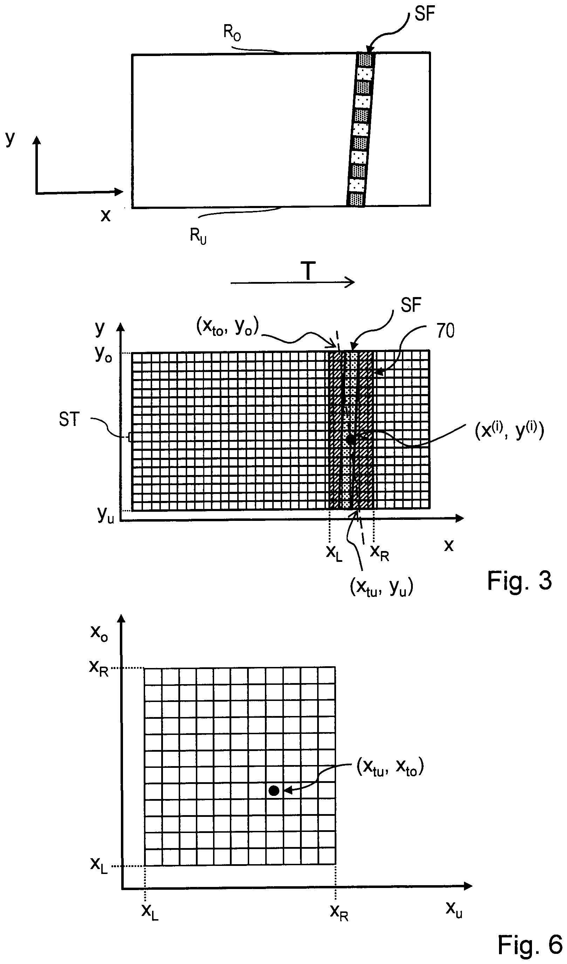

Fig. 3 zeigt oben ein Wertdokument mit einem Sicherheitsfaden SF und darunter das entsprechende Feld von Orten, an denen Magnetdaten erfasst wurden. Die erfassten Magnetdaten sind Orten (x⁽ⁱ⁾,y⁽ⁱ⁾) auf dem Wertdokument zugeordnet, die im Beispiel auf einem Rechteckgitter liegen. x bezeichnet dabei eine Koordinate in Längsrichtung und damit in diesem Beispiel in Transportrichtung T des Wertdokuments, y eine Koordinate senkrecht dazu. Mit dem Index i (i=1,..., N, N Anzahl der Orte) werden die Orte unterschieden bzw. abgezählt. Der Übersichtlichkeit halber sind in Fig. 3 nur wenige Orte gezeigt, tatsächlich kann die Anzahl wesentlich größer sein.

Da in diesem Beispiel angenommen wird, dass die Wertdokumente jeweils einen Sicherheitsfaden SF aufweisen, der in einer erwarteten Richtung parallel oder wenigsten näherungsweise parallel zu der kurzen Seite des Wertdokuments bzw. quer zur Längsrichtung bzw. längeren Seite des Wertdokuments angeordnet ist (vgl. Figuren 2 und 3), und dass die Wertdokumente mit ihrer Längsseite wenigstens näherungsweise parallel zu der Transportrichtung T transportiert werden, verläuft die erwartete Richtung des Sicherheitsfadens in Richtung der y-Achse bzw. quer zur Transportrichtung T.

Im Beispiel in Fig. 3 ist der Sicherheitsfaden zur Veranschaulichung des allgemeinen Falls gegenüber der eigentlich zu erwartenden, zur Längskante bzw. Transportrichtung zu erwartenden Richtung geneigt gezeigt, was beispielsweise durch Unregelmäßigkeiten beim Transport bedingt sein kann. Idealerweise verliefe er in der erwarteten bzw. zu erwartenden Richtung senkrecht zur Transportrichtung.

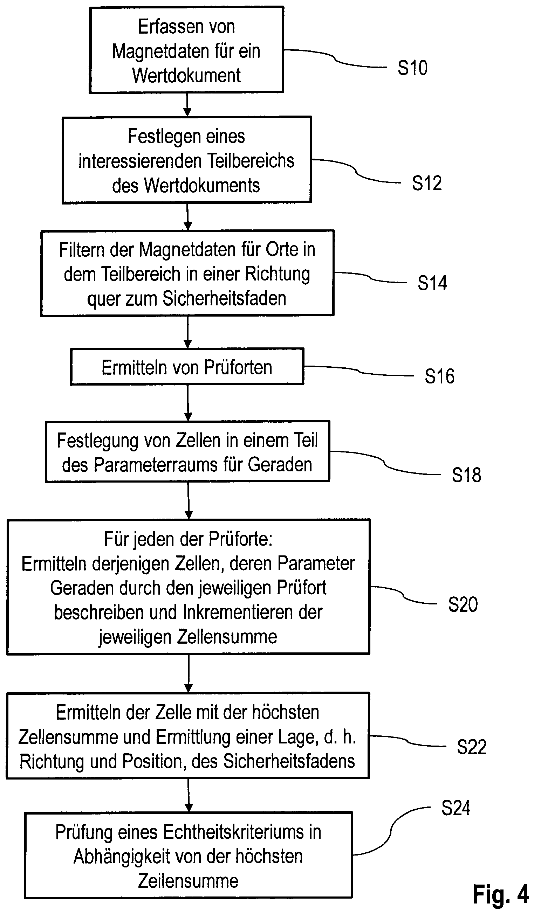

Die Steuer- und Auswerteeinrichtung 46 umfasst eine Datenverarbeitungseinrichtung. In dem Speicher 50 der Steuer- und Auswerteeinrichtung 46 bzw. der Vorrichtung 52 ist ein Computerprogramm mit Programmcode gespeichert, bei dessen Ausführung durch den Prozessor 48 der Steuer- und Auswerteeinrichtung 46 das folgende Verfahren zur Detektion des Sicherheitsfadens in dem Wertdokument durchgeführt wird. Das Verfahren ist grob schematisch in Fig. 4 veranschaulicht.

In Schritt S10 erfasst der Magnetsensor 44 beim Vorbeitransport eines Wertdokuments in vorgegebenen Zeitabständen Magnetdaten.

Diese Magnetdaten werden den Orten zugeordnet in dem Speicher 50 gespeichert und damit für das Verfahren bereitgestellt. In diesem Beispiel können sie in Matrixform abgespeichert sein, wobei x- und y-Koordinaten durch entsprechende Zeilen- und Spaltenindices ersetzt sind.

In den Schritten S12 bis S16 werden Prüforte festgelegt, die in den folgenden Schritten, d. h. ab Schritt S18, verwendet werden.

In dem optionalen Schritt S12 wird unter Verwendung der Magnetdaten ein interessierender Teilbereich des Wertdokuments festgelegt, in dem der Sicherheitsfaden zu erwarten ist. Dazu werden im vorliegenden Beispiel Mittelwerte über Magnetdaten an Orten jeweils in y-Richtung verlaufenden Spalten gebildet. Die Orte der Spalten weisen jeweils gleiche x- aber unterschiedliche y-Koordinaten auf. Diese Mittelwerte werden mit einem Filter gefiltert, der glättet und zugleich Gradienten ermittelt, wozu beispielsweise ein Haar-Wavelet-Filter verwendet werden kann. Die x-Koordinate der maximalen Filterantwort gibt dann einen Hinweis auf die ungefähre Lage des Sicherheitsfadens in x-Richtung. Als Teilbereich kann dann ein Rechteck bestimmt werden, das in y-Richtung von den sich gegenüberliegenden Rändern Ru und Ro des Wertdokuments und in x-Richtung durch zwei Geraden in y-Richtung begrenzt wird. Die x-Koordinaten der Geraden in y-Richtung begrenzen im Beispiel ein Intervall einer vorgegebenen Länge, in dessen Mitte die ermittelte x- Koordinate der maximalen Filterantwort liegt. Die Länge kann in Abhängigkeit von einer maximalen Ausdehnung zu bearbeitender Wertdokumente in y-Richtung und einer maximal zu erwartenden Neigung des Sicherheitsfadens in den erfassten Daten gegenüber der y-Achse in vorgegebener Weise festgelegt werden. Ein solcher Teilbereich 70 ist in Fig. 3 als schraffiertes Rechteck, in dem der Sicherheitsfaden SF liegt, dargestellt. Er erstreckt sich zwischen den beiden parallel zur Transportrichtung T erstreckenden Rändern Ru und Ro des Wertdokuments mit y-Koordinaten yᵤ bzw. yₒ und ist in Transportrichtung durch zwei Geraden senkrecht zur Transportrichtung begrenzt, die die x-Achse bei den Koordinaten x_{L} bzw. x_{R} schneiden.

Im Folgenden werden dann nur noch Orte in diesem Teilbereich weiter betrachtet bzw. verwendet.

In dem ebenfalls optionalen Schritt S14 werden zur Festlegung der Prüforte die Magnetdaten für Orte in dem Teilbereich in einer Richtung quer zum Sicherheitsfaden unter Bildung gefilterter Magnetdaten gefiltert. Dies geschieht, um Beiträge, die von dem Sicherheitsfaden stammen, hervorzuheben. Als Filter wird ein Filter verwendet, das auf Gradienten der Magnetdaten in einer Richtung quer zur erwarteten Richtung des Sicherheitsfadens, hier also in x-Richtung, anspricht. In diesem Beispiel soll es darüber hinaus auch glättend wirken.

Im vorliegenden Beispiel wird dazu ein Haar-Wavelet verwendet, das schematisch in Fig. 5 veranschaulicht ist und dessen Rechtecke eine Breite in Abhängigkeit von der Ortsauflösung der Magnetdaten, beispielsweise 20 Pixel in x-Richtung, haben. In der Darstellung wird von einer Darstellung der Magnetdaten in Matrixform ausgegangen.

In dem folgenden Schritt S16 werden unter Verwendung der gefilterten Magnetdaten Prüforte in dem Teilbereich festgelegt. Dazu wird im Beispiel angenommen, dass der Sicherheitsfaden SF nicht parallel zur Transportrichtung T bzw. der x-Achse verläuft, sondern etwa in einer erwarteten Richtung senkrecht zur Transportrichtung T. Es werden parallele Streifen ST, die quer zu einer vorgegebenen erwarteten Richtung des Sicherheitsfadens SF bzw. in Transportrichtung verlaufen, betrachtet. Im Beispiel verlaufen die Streifen parallel zur x-Achse, wobei ihre Breite dem Abstand der Orte in y-Richtung entspricht. Die Orte eines Streifens liegen dann auf einer zur x-Achse parallelen Geraden. Für einen jeweiligen Streifen werden Orte in dem Streifen gesucht, für die die gefilterten Magnetdaten ein vorgegebenes Streifenkriterium erfüllen. Im Beispiel besteht dieses darin, dass an dem Ort das Maximum der gefilterten Magnetdaten von Orten des Streifens liegt. Es wird also für einen Streifen derjenige Ort gesucht, an dem das Maximum der gefilterten Magnetdaten von Orten des Streifens liegt. Überschreitet das Maximum einen vorgegebenen Mindestwert, der über der Schwelle für Rauschen in den Magnetdaten liegt, wird der Ort als Prüfort festgelegt.

In Schritt S18 werden gemäss Erfindung Zellen wenigstens in einem Teil des Parameterraums für Geraden in der x-y-Ebene festgelegt, wobei jeder der Zellen eine Zellensumme zugeordnet ist, die zu Beginn auf einen gleichen Anfangswert für alle Zellen, beispielsweise 0, gesetzt wird.

Der Parameterraum für Geraden in der x-y-Ebene ist zweidimensional. Im Beispiel wurde angenommen, dass der Sicherheitsfaden quer zur Transportrichtung und damit der x-Achse verläuft und der Teilbereich so dimensioniert ist, dass der Sicherheitsfaden innerhalb des Teilbereichs verläuft. Als Geradenparameter können dann beispielsweise die x-Koordinaten von Schnittpunkten einer Geraden mit den Rändern des Wertdokuments bzw. den entsprechenden Seiten des Teilbereichs verwendet werden, da die Ränder bzw. deren Lage für diesen Verfahrensschritt als gegeben vorausgesetzt werden können. Im Folgenden seien die Koordinaten von Schnittpunkten mit dem einen, im Beispiel dem unteren Rand Ru, gegeben durch (x,yᵤ) bzw. die Koordinaten von Schnittpunkten mit dem anderen dem einen gegenüberliegenden, oberen Rand Ro gegeben durch (x,yₒ), wobei x jeweils die Koordinate in x-Richtung bezeichnet und yᵤ bzw. yₒ die y-Koordinate des unteren bzw. oberen Randes Ru bzw. Ro. Da yᵤ und yₒ durch den Verlauf der Ränder festgelegt sind, ist der Teil des Parameterraums daher gegeben durch das Produkt aus den möglichen x-Koordinaten in dem Teilbereich für die Schnittpunkte mit dem einen Rand und aus den möglichen x-Koordinaten in dem Teilbereich für die Schnittpunkte mit dem zweiten gegenüberliegenden Rand; dies sind jeweils die Intervalle mit x_{L} ≤x ≤ x_{R}. Durch diese Wahl ist auch die Größe des Teils des Parameterraums festgelegt. Der sich ergebende Teil des Parameterraums ist in Fig. 6 veranschaulicht, in der xᵤ den Parameter bezeichnet, der der x-Koordinate eines Punktes einer Geraden auf dem unteren Randes entspricht und xₒ den Parameter bezeichnet, der der x-Koordinate eines Punktes einer Geraden auf dem oberen Randes entspricht. Der Teil des Parameterraums wird in Zellen gleicher Größe unterteilt, wobei die Größe in Abhängigkeit von der gewünschten Genauigkeit und der noch hinnehmbaren Rechenzeit vorgegeben ist. In der Figur beträgt die Anzahl der Zellen der Übersichtlichkeit halber nur 11*11=121.

In Schritt S20 werden dann für jeden der Prüforte diejenigen Zellen ermittelt, deren Parameter Geraden durch den jeweiligen Prüfort beschreiben; deren Zellensumme wird jeweils inkrementiert. Dazu wird geprüft, welche Geraden durch den jeweiligen Prüfort verlaufen, deren Geradenparameter in einer der Zellen liegen. Im Beispiel kann dazu wegen der Anordnung der Zellen beispielsweise für jedes Parameterintervall auf der xᵤ-Achse eine Gerade bestimmt werden, deren erster Parameter in der Mitte des Parameterintervalls liegt und die durch den Prüfort führt. Dies ist in Fig. 3 beispielhaft durch die gestrichelte Gerade durch den Punkt (xₜᵤ, yᵤ) und den Ort bzw. Punkt (x⁽ⁱ⁾,y⁽ⁱ⁾) dargestellt. Es kann dann bestimmt werden, in welchem Punkt (xₜₒ, yₒ) die Gerade den oberen Rand schneidet. Es wird dann diejenige Zelle gesucht, innerhalb derer der resultierende Parameterpunkt (xₜᵤ, xₜₒ) liegt (vgl. Fig. 6). Die Zellensumme der entsprechenden, durch (xₜᵤ, xₜₒ) gegebenen Zelle wird dann um einen Inkrementwert erhöht. In diesem Beispiel wird als Inkrementwert ein von den Magnetdaten abhängiger Verarbeitungswert verwendet, der der ungefilterte Wert der Magnetdaten für den Prüfort ist.

In Schritt S22 sucht bzw. ermittelt die Steuer- und Auswerteeinrichtung 46 bzw. deren Prozessor unter den Zellen diejenige, die die höchste Zellensumme hat. Als Lage des Sicherheitsfadens wird dann eine Gerade ermittelt, die durch der Zelle zugeordnete Geradenparameter gegeben ist. Aus den der Zelle entsprechenden Parametern werden dazu Daten ermittelt werden, die die Lage des Sicherheitsfadens bestimmen. Im Beispiel könnte diese durch die Punkte auf den Rändern mit den x-Koordinaten entsprechend den durch die Zelle gegebenen Parametern und entsprechenden y-Koordinaten yᵤ bzw. yₒ gegeben sein. Es werden dann entsprechende Parameter bzw. Daten gespeichert. Diese können dann von einem Verfahren zur Prüfung des Sicherheitsfadens verwendet werden. Weiter kann ein Signal erzeugt werden, das die Parameter bzw. Daten beschreibt.

In einem optionalen Schritt S24 kann noch geprüft werden, ob der Wert der Zellensumme ein Echtheitskriterium erfüllt. Im Beispiel wird als Kriterium verwendet, ob die Zellensumme einen Schwellwert überschreitet, der für Sicherheitsfäden echter Wertdokumente, vorzugsweise des vorgegebenen Wertdokumenttyps, charakteristisch ist. Der Wertdokumenttyp kann unter Verwendung entsprechender Referenzdaten zuvor aus Daten wenigstens eines der optischen Sensoren bestimmt worden sein. Wird dieser überschritten, wird ein Signal abgegeben, das anzeigt, dass ein Sicherheitsfaden vorhanden ist. Dieses kann zusammen mit anderen Auswerteergebnissen zur Ermittlung einer Echtheit des Wertdokuments bzw. einer entsprechenden Sortierklasse und der Abgabe eines entsprechenden Stellsignals verwendet werden. Wird der Schwellwert unterschritten, wird ein Signal abgegeben, das anzeigt, dass ein Sicherheitsfaden nicht vorhanden ist. Dieses kann als Hinweis auf das Vorliegen eines Fälschungsverdachts für das Wertdokuments verwendet werden; gegebenenfalls in Verbindung mit anderen Auswerteergebnissen kann es zur Ermittlung einer entsprechenden Sortierklasse und der Abgabe eines entsprechenden Stellsignals verwendet werden.

In anderen Ausführungsbeispielen kann zusätzlich geprüft werden, ob die ermittelte Lage des Sicherheitsfadens in einem für den Wertdokumenttyp zulässigen Bereich liegt. Ist dies der Fall wird ein entsprechendes Echtheitssignal, das einen Hinweis auf die Echtheit des Dokuments darstellt abgegeben und/ oder ein entsprechendes Signal abgegeben. Diese können dann zur Ermittlung der Echtheit des Wertdokuments zusammen mit anderen Auswerteergebnissen der anderen Sensoren verwendet werden.

Es kann sich dann, beispielsweise im Fall von codierten Fäden, in einem weiteren Schritt eine Prüfung des Sicherheitsfadens selbst, im Beispiel eine Prü- . fung der Codierung des Sicherheitsfadens, anschließen, bei der die ermittelte Gerade bzw. die ermittelten Parameter verwendet wird. Eine solche ist beispielsweise in DE 10 2013 205 891 A1 beschrieben. Je nach Ergebnis der Prüfung kann ein weiteres Echtheitssignal abgegeben werden, das anzeigt, ob ein Hinweis auf eine Fälschung vorliegt oder nicht.

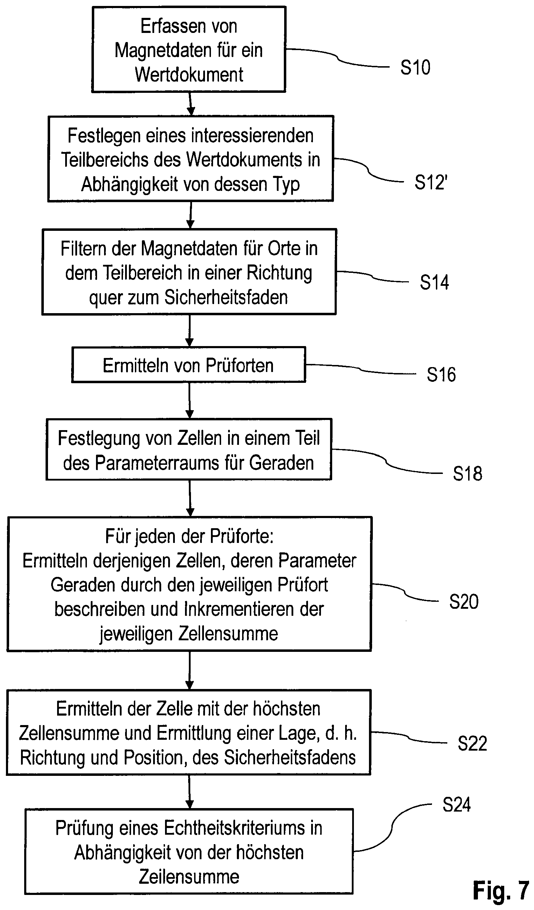

Ein anderes Ausführungsbeispiel in Fig. 7 unterscheidet sich von dem ersten Ausführungsbeispiel dadurch, dass der Schritt S12 ersetzt ist durch einen Schritt S12'. In diesem Schritt S12' erfolgt zum Festlegen eines interessierenden Teilbereichs des Wertdokuments zunächst der Teilschritt des Ermittelns des Wertdokumenttyps, im Beispiel der Währung, der Stückelung und der Emission des Wertdokuments, und der Lage des Wertdokuments im Transportpfad beispielsweise in Abhängigkeit von einem digitalen Bild des Wertdokuments, das mittels wenigstens eines optischen Sensors, im Beispiel des optischen Remissionssensors 40 und/oder des Transmissionssensors 42 erfasst wurde. Weiter werden entsprechende in der Steuer- und Auswerteeinrichtung 46 gespeicherte Referenzdaten verwendet, die für einen gegebenen Wertdokumenttyp und eine gegebene Lage einen interessierenden Teilbereich des Wertdokuments beschreiben. Diese in Abhängigkeit von dem ermittelten Wertdokumenttyp und der ermittelten Lage bestimmten Daten legen den im Folgenden zu verwendenden Teilbereich des Wertdokuments fest.

Die weiteren Schritte des Verfahrens sind gegenüber dem ersten Ausführungsbeispiel unverändert.

Weitere Ausführungsbeispiele unterscheiden sich von den geschilderten Ausführungsbeispielen dadurch, dass in Schritt S14 statt des Haar-Wavelets als Filter eine erste Ableitung der Gaußschen Glockenkurve, oder das Magnetsignal selbstverwendet werden.

Weitere Ausführungsbeispiele unterscheiden sich von den geschilderten Ausführungsbeispielen dadurch, dass in Schritt S16 zum Ermitteln von Prüforten nicht die gefilterten Magnetdaten verwendet werden, sondern für die Streifen jeweils derjenige Ort als Prüfort gewählt wird, an dem die Magnetdaten des jeweiligen Streifens maximal sind.

Weitere Ausführungsbeispiele unterscheiden sich von den geschilderten Ausführungsbeispielen dadurch, dass die Schritte S18 bis S22 so geändert sind, dass andere Geradenparameter, beispielsweise auf der Basis von Polarkoordinaten, verwendet werden. In dem Fall der Verwendung von Polarkoordinaten kann die Lage einer Gerade zu dem jeweiligen Prüfort durch einen Winkel zu der Transportrichtung bzw. einem Rand des Wertdokuments und den Abstand der Geraden zu dem Punkt gegeben sein.

Weitere Ausführungsbeispiele unterscheiden sich von den geschilderten Ausführungsbeispielen dadurch, dass in Schritt S20 als Inkrementwert ein konstanter, nicht von den Magnetdaten abhängiger Wert verwendet wird.

Weitere Ausführungsbeispiele unterscheiden sich von den geschilderten Ausführungsbeispielen dadurch, dass die Steuer- und Auswertevorrichtung 46 getrennte Einheiten umfasst, die jeweils einen Prozessor und einen Speicher, in dem entsprechender Programmcode gespeichert ist, aufweisen, und von denen eine eine Schnittstelle für die Sensoreinrichtung aufweist und zur Auswertung der Sensordaten wenigstens des Magnetsensors und Abgabe eines Sortiersignals und eine andere zur Steuerung der Vorrichtung in Abhängigkeit von dem Sortiersignal ausgebildet ist.

## Patentansprüche

1. Verfahren zum Detektieren eines Sicherheitsfadens (SF) in einem Wertdokument (12), bei dem
Magnetdaten für Orte auf dem Wertdokument (12) verwendet werden, die eine magnetische Eigenschaft des Wertdokuments (12) an dem Ort darstellen,
unter Verwendung der Orte Prüforte auf dem Wertdokument (12) festgelegt werden,
eine Menge von Zellen bereitgestellt wird, die eine Aufteilung wenigstens eines vorgegebenen Teils eines Parameterraums für Geradenparameter in Zellen darstellen, wobei jeder der Zellen eine Zellensumme zugeordnet ist, die zu Beginn auf einen gleichen Anfangswert für alle Zellen gesetzt wird (S23 22-25),
für die Prüforte jeweils Zellen der Menge ermittelt werden, innerhalb derer jeweils Geradenparameter einer Geraden liegen, die durch den jeweiligen Prüfort verläuft, und eine Zellensumme für die jeweilige Zelle um einen Inkrementwert erhöht wird, und
die Zelle mit der höchsten Zellensumme gesucht und als Lage des Sicherheitsfadens (SF) eine durch der Zelle zugeordnete Geradenparameter gegebene Gerade ermittelt wird.

2. Verfahren nach Anspruch 1, bei dem
mittels eines Magnet- Sensors (44) Magnetdaten für Orte auf dem Wertdokument (12) erfasst und diese Magnetdaten als Magnetdaten verwendet werden.

3. Verfahren nach einem der vorhergehenden Ansprüche, bei dem Prüforte festgelegt werden, die in einem Teilbereich des Wertdokuments (12) liegen.

4. Verfahren nach Anspruch 3, bei dem ein Wertdokumenttyp des Wertdokuments (12) bestimmt wird und der Teilbereich in Abhängigkeit von dem Wertdokumenttyp des Wertdokuments (12) und vorzugweise dessen Lage vorgegeben wird.

5. Verfahren nach Anspruch 3, bei dem der Teilbereich aus den Magnetdaten bestimmt wird.

6. Verfahren nach einem der vorhergehenden Ansprüche, bei dem zum Festlegen der Prüforte die Magnetdaten unter Bildung gefilterter Magnetdaten gefiltert und die gefilterten Magnetdaten zum Festlegen der Prüforte verwendet werden, wobei vorzugsweise zum Filtern ein Filter verwendet wird, das glättend wirkt und/ oder auf Gradienten der Magnetdaten anspricht.

7. Verfahren nach einem der vorhergehenden Ansprüche, bei dem beim Festlegen der Prüforte für parallele Streifen (ST), die quer zu einer vorgegebenen erwarteten Richtung des Sicherheitsfadens (SF) verlaufen, jeweils als Prüfort ein Ort in dem Streifen (ST) festgelegt wird, für den die Magnetdaten bzw. gefilterten Magnetdaten für Orte in dem Streifen (ST) ein vorgegebenes Streifenkriterium erfüllen.

8. Verfahren nach einem der vorhergehenden Ansprüche, bei dem der Teil des Parameterraums in Abhängigkeit von einer vorgegebenen erwarteten Richtung des Sicherheitsfadens (SF) und/oder einer erwarteten Position des Sicherheitsfadens (SF) festgelegt wird.

9. Verfahren nach einem der vorhergehenden Ansprüche, bei dem die Zellen so gewählt sind, dass Geraden, die durch Geradenparameter innerhalb der jeweiligen Zelle gegeben sind, mit der vorgegebenen erwarteten Richtung des Sicherheitsfadens (SF) einen Winkel einschließen, der in einem vorgegebenen Winkelintervall, vorzugsweise zwischen 0° und 45°, liegt.

10. Verfahren nach einem der vorhergehenden Ansprüche, bei dem die Zellen so gewählt sind, dass Geraden, die durch Geradenparameter innerhalb der jeweiligen Zelle gegeben sind, wenigstens näherungsweise orthogonal zu der vorgegebenen erwarteten Richtung des Sicherheitsfadens (SF) verlaufende Ränder des Teilbereichs schneiden.

11. Verfahren nach einem der vorhergehenden Ansprüche, bei dem der Inkrementwert unabhängig vom Prüfort ist.

12. Verfahren nach einem der vorhergehenden Ansprüche, bei dem jedem der Prüforte ein Verarbeitungswert, der von den Magnetdaten oder den gefilterten Magnetdaten abhängig ist, zugeordnet ist, und der Inkrementwert für den jeweiligen Prüfort von dem zugeordneten Verarbeitungswert abhängig ist.

13. Verfahren nach einem der vorhergehenden Ansprüche, bei dem ein Kriterium für das Vorhandensein eines Sicherheitsfadens (SF), das von der höchsten Zellensumme abhängt, geprüft wird, wozu vorzugsweise die höchste Zellensumme mit einem vorgegebenen Schwellwert verglichen wird und besonders bevorzugt in Abhängigkeit von der Ergebnis des Vergleichens ein Hinweis auf die Präsenz eines Sicherheitsfadens (SF) bzw. ein Hinweis auf das Fehlen eines Sicherheitsfadens (SF) erzeugt und/oder gespeichert und/oder ein Signal, das einen Hinweis auf die Präsenz eines Sicherheitsfadens (SF) bzw. ein Hinweis auf das Fehlen eines Sicherheitsfadens (SF) darstellt, abgegeben wird.

14. Computerprogramm zur Ausführung mittels einer Datenverarbeitungseinrichtung (46) mit einem Prozessor (48), das Programmcode enthält, bei dessen Ausführung der Prozessor (48) ein Verfahren nach einem der vorhergehenden Ansprüche ausführt.

15. Computerlesbarer Datenträger, auf dem ein Computerprogramm nach Anspruch 14 gespeichert ist

16. Auswerteeinrichtung zum Detektieren eines Sicherheitsfadens (SF) in einem Wertdokument (12), die dazu eingerichtet ist, ein Verfahren nach einem der Ansprüche 1 bis 13 durchzuführen und eine Schnittstelle zum Erfassen der Magnetdaten oder von Signalen, aus denen die Magnetdaten ermittelbar sind, aufweist.

17. Auswerteeinrichtung nach Anspruch 16, die weiter einen Prozessor (48) und einen Speicher (50), in dem ein Computerprogramm nach Anspruch 14 zur Ausführung durch den Prozessor (48) gespeichert ist, aufweist, mittels dessen das Verfahren durchgeführt wird.

18. Vorrichtung zur Detektion eines Sicherheitsfadens (SF) in einem Wertdokument (12), umfassend
einen Magnetsensor (44) zur Bereitstellung der Magnetdaten und
einer Auswerteeinrichtung (46) nach einem der Ansprüche 16 oder 17, wobei vorzugsweise der Magnetsensor (44) mit der Schnittstelle der Auswerteeinrichtung (46) zur Übertragung von Magnetdaten verbunden ist.

19. Vorrichtung nach Anspruch 18, die weiter eine Transporteinrichtung (18) zum Transportieren des Wertdokuments (12) entlang eines Transportpfades (36) aufweist, wobei der Magnetsensor (44) an dem Transportpfad (36) angeordnet ist.

20. Vorrichtung zur Bearbeitung von Wertdokumenten (12) mit einer Zuführeinrichtung (14) zum Zuführen zu bearbeitender Wertdokumente (12), einer Ausgabeeinrichtung (16) zur Ausgabe oder Aufnahme der bearbeiteten Wertdokumente (12), einer Transporteinrichtung (18) zum Transportieren der Wertdokumente (12) von der Zuführeinrichtung (14) entlang eines Transportpfades (36) zu der Ausgabeeinrichtung (16) und mit wenigstens einer im Bereich eines Abschnitts des Transportpfades (36) angeordneten Vorrichtung (44, 46) zur Detektion eines Sicherheitsfadens (SF) in einem Wertdokument (12), das entlang des Transportpfads (36) transportiert wird, nach Anspruch 18.

## Claims

1. Method for detecting a security thread (SF) in a value document (12), wherein
magnetic data for locations on the value document (12) are used that represent a magnetic property of the value document (12) at the location,
check locations on the value document (12) are defined using the locations,
a set of cells is provided that represent a division of at least one predefined part of a parameter space for straight line parameters into cells, each of the cells being assigned a cell sum that is initially set to an identical initial value for all the cells (S23 22-25),
for the check locations respectively cells of the set are ascertained within which lie respectively straight line parameters of a straight line extending through the respective check location, and a cell sum for the respective cell is increased by an increment value, and
the cell with the highest cell sum is sought and a straight line given by straight line parameters assigned to the cell is ascertained as the position of the security thread (SF).

2. Method according to Claim 1, wherein
by means of a magnetic sensor (44), magnetic data for locations on the value document (12) are acquired and these magnetic data are used as magnetic data.

3. Method according to either of the preceding claims, wherein check locations are defined that lie in a subregion of the value document (12).

4. Method according to Claim 3, wherein a value document type of the value document (12) is determined, and the subregion is predefined depending on the value document type of the value document (12) and preferably the position thereof.

5. Method according to Claim 3, wherein the subregion is determined from the magnetic data.

6. Method according to any of the preceding claims, wherein for defining the check locations, the magnetic data are filtered to form filtered magnetic data and the filtered magnetic data are used for defining the check locations, a filter that has a smoothing effect and/or responds to gradients of the magnetic data preferably being used for filtering.

7. Method according to any of the preceding claims, wherein when defining the check locations for parallel strips (ST) extending transversely with respect to a predefined expected direction of the security thread (SF), a location in the strip (ST) for which the magnetic data or filtered magnetic data for locations in the strip (ST) satisfy a predefined strip criterion is respectively defined as check location.

8. Method according to any of the preceding claims, wherein the part of the parameter space is defined depending on a predefined expected direction of the security thread (SF) and/or an expected position of the security thread (SF).

9. Method according to any of the preceding claims, wherein the cells are chosen such that straight lines given by straight line parameters within the respective cell form an angle with the predefined expected direction of the security thread (SF), which angle is in a predefined angle interval, preferably between 0° and 45°.

10. Method according to any of the preceding claims, wherein the cells are chosen such that straight lines given by straight line parameters within the respective cell intersect edges of the subregion that extend at least approximately orthogonally to the predefined expected direction of the security thread (SF).

11. Method according to any of the preceding claims, wherein the increment value is independent of the check location.

12. Method according to any of the preceding claims, wherein each of the check locations is assigned a processing value dependent on the magnetic data or the filtered magnetic data, and the increment value for the respective check location is dependent on the assigned processing value.

13. Method according to any of the preceding claims, wherein a criterion for the presence of a security thread (SF) that is dependent on the highest cell sum is checked, for which purpose preferably the highest cell sum is compared with a predefined threshold value and particularly preferably depending on the result of the comparison, an indication of the presence of a security thread (SF) or an indication of the absence of a security thread (SF) is produced and/or stored and/or a signal is emitted that represents an indication of the presence of a security thread (SF) or an indication of the absence of a security thread (SF).

14. Computer program for execution by means of a data processing device (46) with a processor (48) containing program code, upon the execution of which the processor (48) executes a method according to any of the preceding claims.

15. Computer-readable data carrier on which a computer program according to Claim 14 is stored.

16. Evaluation device for detecting a security thread (SF) in a value document (12), which is configured to carry out a method according to any of Claims 1 to 13 and comprises an interface for acquiring the magnetic data or signals from which the magnetic data are ascertainable.

17. Evaluation device according to Claim 16, which further comprises a processor (48) and a memory (50), in which is stored a computer program according to Claim 14 for execution by the processor (48), by means of which the method is carried out.

18. Apparatus for detecting a security thread (SF) in a value document (12), comprising
a magnetic sensor (44) for providing the magnetic data, and
an evaluation device (46) according to either of Claims 16 and 17,
preferably the magnetic sensor (44) being connected to the interface of the evaluation device (46) for the transmission of magnetic data.

19. Apparatus according to Claim 18, which further comprises a transport device (18) for transporting the value document (12) along a transport path (36), the magnetic sensor (44) being arranged on the transport path (36).

20. Apparatus for processing value documents (12), comprising a feed device (14) for feeding value documents (12) to be processed, a dispensing device (16) for dispensing or receiving the processed value documents (12), a transport device (18) for transporting the value documents (12) from the feed device (14) along a transport path (36) to the dispensing device (16), and comprising at least one apparatus (44, 46) arranged in the region of a section of the transport path (36) for detecting a security thread (SF) in a value document (12) being transported along the transport path (36), according to Claim 18.

## Revendications

1. Procédé permettant de détecter un fil de sécurité (SF) dans un document de valeur (12), selon lequel des données magnétiques associées à des points sur le document de valeur (12) sont utilisées, lesquelles représentent une propriété magnétique du document de valeur (12) au niveau du point,
des points de contrôle sont spécifiés sur le document de valeur (12) à l'aide de ces points,
un ensemble de cellules est fourni, lesquelles représentent une division en cellules d'au moins une partie prédéterminée d'un espace des paramètres destiné à des paramètres de droite, une somme de cellules étant associée à chacune des cellules, laquelle est initialement fixée à une valeur initiale identique pour toutes les cellules (S23 22-25),
des cellules de l'ensemble à l'intérieur duquel se trouvent respectivement des paramètres d'une droite qui passe par le point de contrôle respectif sont déterminées pour les points de contrôle, et une somme de cellules correspondant à la cellule respective étant augmentée d'une valeur d'incrémentation, et
la cellule ayant la somme de cellules la plus élevée est recherchée et une droite donnée par des paramètres de droite associés à la cellule est déterminée comme étant la position du fil de sécurité (SF).

2. Procédé selon la revendication 1, selon lequel des données magnétiques associées à des points sur le document de valeur (12) sont détectées au moyen d'un capteur magnétique (44) et ces données magnétiques sont utilisées comme données magnétiques.

3. Procédé selon l'une des revendications précédentes, selon lequel des points de contrôle sont fixés dans une zone partielle du document de valeur (12).

4. Procédé selon la revendication 3, selon lequel un type de document de valeur du document de valeur (12) est déterminé et la zone partielle est prédéfinie en fonction du type de document de valeur du document de valeur (12) et de préférence de sa position.

5. Procédé selon la revendication 3, selon lequel la zone partielle est déterminée à partir des données magnétiques.

6. Procédé selon l'une des revendications précédentes, selon lequel, pour définir les points de contrôle, les données magnétiques sont filtrées afin de créer des données magnétiques filtrées et les données magnétiques filtrées sont utilisées pour spécifier les points de contrôle, un filtre présentant un effet de lissage et/ou réagissant à des gradients des données magnétiques étant de préférence utilisé pour le filtrage.

7. Procédé selon l'une des revendications précédentes, selon lequel, lors de la spécification des points de contrôle pour des bandes parallèles (ST) qui s'étendent transversalement à une direction attendue prédéterminée du fil de sécurité (SF), un point de la bande (ST) pour lequel les données magnétiques ou les données magnétiques filtrées pour des points de la bande (ST) satisfont à un critère de bande prédéterminé est respectivement spécifié comme point de contrôle.

8. Procédé selon l'une des revendications précédentes, selon lequel la partie de l'espace des paramètres est déterminée en fonction d'une direction attendue prédéterminée du fil de sécurité (SF) et/ou d'une position attendue du fil de sécurité (SF).

9. Procédé selon l'une des revendications précédentes, selon lequel les cellules sont choisies de telle sorte que des droites, qui sont données par des paramètres de droites à l'intérieur de la cellule respective, forment avec la direction attendue prédéterminée du fil de sécurité (SF) un angle qui se situe dans un intervalle angulaire prédéterminé, de préférence entre 0° et 45°.

10. Procédé selon l'une des revendications précédentes, selon lequel les cellules sont choisies de telle sorte que des droites, qui sont données par des paramètres de droites à l'intérieur de la cellule respective, coupent des bords de la zone partielle qui s'étendent au moins approximativement perpendiculairement à la direction attendue prédéterminée du fil de sécurité (SF).

11. Procédé selon l'une des revendications précédentes, selon lequel la valeur d'incrémentation est indépendante du point de contrôle.

12. Procédé selon l'une des revendications précédentes, selon lequel une valeur de traitement dépendant des données magnétiques ou des données magnétiques filtrées est associée à chacun des points de contrôle, et la valeur d'incrémentation correspondant au point de contrôle respectif dépend de la valeur de traitement associée.

13. Procédé selon l'une des revendications précédentes, selon lequel un critère de présence d'un fil de sécurité (SF) qui dépend de la somme de cellules la plus élevée est vérifié, la somme de cellules la plus élevée étant à cet effet comparée à une valeur de seuil prédéfinie et, de manière particulièrement préférée, une indication de la présence d'un fil de sécurité (SF) ou une indication de l'absence d'un fil de sécurité (SF) étant générée et/ou enregistrée en fonction du résultat de la comparaison et/ou un signal qui représente une indication de la présence d'un fil de sécurité (SF) ou une indication de l'absence d'un fil de sécurité (SF) étant délivré.

14. Programme d'ordinateur destiné à être exécuté au moyen d'un dispositif de traitement de données (46) comportant un processeur (48) et contenant un code de programme lors de l'exécution duquel le processeur (48) met en œuvre un procédé selon l'une des revendications précédentes.

15. Support de données lisible par ordinateur, sur lequel est stocké un programme d'ordinateur selon la revendication 14.

16. Dispositif d'évaluation permettant de détecter un fil de sécurité (SF) dans un document de valeur (12), qui est conçu pour mettre en œuvre un procédé selon l'une des revendications 1 à 13 et qui présente une interface permettant d'acquérir les données magnétiques ou des signaux à partir desquels les données magnétiques peuvent être déterminées.

17. Dispositif d'évaluation selon la revendication 16, comportant en outre un processeur (48) et une mémoire (50) dans laquelle est stocké un programme d'ordinateur selon la revendication 14 destiné à être exécuté par le processeur (48) et au moyen duquel le procédé est mis en oeuvre.

18. Dispositif permettant de détecter un fil de sécurité (SF) dans un document de valeur (12), comprenant un capteur magnétique (44) destiné à fournir les données magnétiques et
un dispositif d'évaluation (46) selon l'une des revendications 16 à 17, dans lequel le capteur magnétique (44) est de préférence relié à l'interface du dispositif d'évaluation (46) pour la transmission de données magnétiques.

19. Dispositif selon la revendication 18, comportant en outre un dispositif de transport (18) destiné à transporter le document de valeur (12) le long d'un chemin de transport (36), dans lequel le capteur magnétique (44) est disposé sur le chemin de transport (36) .

20. Dispositif permettant de traiter des documents de valeur (12), comprenant un dispositif d'acheminement (14) destiné à acheminer des documents de valeur (12) à traiter, un dispositif de sortie (16) destiné à fournir en sortie ou à recevoir les documents de valeur (12) traités, un dispositif de transport (18) destiné à transporter les documents de valeur (12) depuis le dispositif d'acheminement (14) le long d'un chemin de transport (36) vers le dispositif de sortie (16) et comprenant au moins un dispositif (44, 46) disposé dans la zone d'une partie du chemin de transport (36) pour la détection d'un fil de sécurité (SF) dans un document de valeur (12) qui est transporté le long du chemin de transport (36), selon la revendication 18.
